# EUROPÄISCHE PATENTSCHRIFT

(11) **EP 0 915 134 B1**
(45) Veröffentlichungstag und Bekanntmachung des Hinweises auf die Patenterteilung: **28.04.2004**
(21) Anmeldenummer: 98120790.5
(22) Anmeldetag: 03.11.1998
(51) Int. Cl.: C08L 23/08, C08L 23/10, C08L 23/16

(54) **Thermoplastische Elastomere hoher Festigkeit, Elastizität und guter Einfärbbarkeit und daraus hergestellte hochschlagzähe Polymerblends**
Thermoplastic elastomer with high resistance, elasticity and good paintability and high impact resistant polymer blends prepared therefrom
Elastomère thermoplastique avec une grande résistance, élasticité et bonne affinité pour les colorants ainsi que comme mélanges de polymères résistants à l'impact préparés à partir de celui-ci

(30) Priorität: 06.11.1997 DE 19748976
(43) Veröffentlichungstag der Anmeldung: 12.05.1999
(73) Patentinhaber: Borealis GmbH, 2323 Schwechat-Mannswörth (AT)
(72) Erfinder: Rätzsch, Manfred Prof. Dr., 4202 Kirchschlag (AT); Hesse, Achim Dr., 4021 Linz (AT); Reichelt, Norbert Dr., 4501 Neuhofen (AT); Bucka, Hartmut Dipl.-Ing., 4622 Eggendorf (AT); Heinemann, Hermann Ing., 3331 Kematen/Ybbs (AT); Stolp, Matthias Dr., 06217 Merseburg (DE); Radusch, Hans-Joachim Prof. Dr., 06667 Weissenfels (DE)
(74) Vertreter: VA TECH Patente GmbH & Co

(56) Entgegenhaltungen:
- EP-A- 0 688 817
- DE-C- 19 724 317
- FR-A- 1 208 447

## Beschreibung

Die Erfindung betrifft thermoplastische Elastomere hoher Festigkeit, Elastizität und guter Einfärbbarkeit sowie daraus hergestellte hochschlagzähe Polymerblends, die für den Einsatz in der Fahrzeugindustrie, in der Haushaltsgeräteindustrie und in der Medizintechnik geeignet sind. Die Erfindung betrifft ebenfalls ein Verfahren zur Herstellung dieser thermoplastischen Elastomere.

Thermoplastische Elastomere wie Styren-Butadien-Blockcopolymere, thermoplastische Polyurethane, Polyesteramide, Polyätheramide, thermoplastische Copolyester-Elastomere und Polyolefinlegierungen mit Elastomeren sind bekannt [Rader, C., Kunststoffe 83(1993)10, 777-781; Kunststoffe 86(1996)12, 1845-1851].

Der besondere Vorteil von Polyolefinlegierungen mit Elastomeren als thermoplastische Elastomere besteht in der einfachen Verarbeitbarkeit und günstigen Recyclingfähigkeit dieser Produkte.

Maßgeblich für die Werkstoffeigenschaften thermoplastischer Elastomerer auf Basis von Polyolefinlegierungen mit Elastomeren wie Festigkeit und Elastizität sind die Zusammensetzung der Polyolefinkomponente und der Elastkomponente und die Verteilung der Elastkomponente in der Polyolefinkomponente (Moore, P., Polypropylene Handbook, Carl Hanser-Verlag München 1996, 218-225).

Bekannte Elastkomponenten für thermoplastische Elastomere auf Basis von Polypropylen sind Ethylen-Propylen-Elastomere (EP 672 712; EP 614940), Ethylen-Propylen-Dien-Elastomere (EP 547 843; EP 409542), Ethylen-Vinylacetat-Copolymere [BE 899507; Coran, A. Rubber Chem. Technol. 54(1981), 892], chlorsulfoniertes Polyethylen (US 41 41 878), elastomere Copolymere aus Ethylen und C₄-C₈-Olefinen wie elastomere Ethylen-Buten-Copolymere, Ethylen-Hexen-Copolymere oder Ethylen-Octen-Copolymere [Yamaguchi, M., J. Appl. Polymer Sci. 62(1996), 87-97; 63(1997), 467-474; Yu, T. J. Plastic Film&Sheeting 10(1994)1, 539-564] sowie elastomere ataktische Polypropylene (EP 334 829) in Anteilen von 35 bis 70 Masse%, bezogen auf die Polyolefinmischung.

Bekannt ist weiterhin, in Polyolefinlegierungen auf Basis Polypropylen/ Ethylen-Propylen-Dien-Elastomeren die Elastkomponente durch Zusätze wie Dodecylmercaptan (DE 26 20 820), Schwefel (EP 336780) oder Tetrabutylthiuramdisulfid (EP 376 213) zu vulkanisieren. Diese Rezepturen haben jedoch den Nachteil einer starken Verfärbung, so daß Halbzeuge und Formstoffe aus diesen Materialien nur schwarz eingefärbt zum Einsatz kommen können.

Bekannt ist ebenfalls, bei der Herstellung thermoplastischer Elastomerer. durch Compoundierung von Polypropylen mit Ethylen-Propylen-Dien-Elastomeren thermisch zerfallende Radikalbildner wie Azoverbindungen (US 50 79 283) oder Peroxide (US 54 59 201; Kim, Y., Polymer Engn.Sci. 35(1995)20, 1592-1594; BE 841507) oder thermisch zerfallende Radikalbildner in Kombination mit Divinylverbindungen wie Divinylpyridin (J 88 067 802) oder Divinylbenzen (US 49 12 148, EP 311451) einzusetzen.

Bei Rezepturen aus Polypropylenen und elastomeren Ethylen-Hexen-Copolymeren ist die Modifizierung der Blends durch Elektronenbestrahlung bekannt (JP 96 301 927).

Thermoplastische Elastomere sind ebenfalls als ternäre Blends aus Polyethylenen, Polypropylenen und Ethylen-Propylen-Dien-Elastomeren bekannt [EP 699522; Kim, J. applied Polymer Sci. 60(1996), 2199-2206].

Durch diese Rezepturen lassen sich thermoplastische Elastomere guter Einfärbbarkeit und hoher Elastizität erzielen, Anforderungen an eine hohe Festigkeit werden jedoch nicht erfüllt.

Schlagzähe Polymerblends aus Polyolefinen und Elastomeren sind bekannt. Bekannte Schlagzähkomponenten für Polypropylen sind amorphe. Ethylen-Propylen-Dien-Elastomere [Michaeli, W., Kunststoffberater (1990)3, 38-43; Kloos, F., Angewandte Makromolekulare Chemie 185/186(1991), 97-108], Ethylen-Propylen-Elastomere [Kim, B., J. Applied Polymer Sci. 60(1996), 2207-2218, J. Applied Polymer Sci. 60(1996), 1391-1403], ebenfalls in Form von Reaktorblends aus Polypropylen und Ethylen-Propylen-Kautschuk [Kresge, E., Macromol.Symp. 53(1992), 173-189, Schwager, H., Kunststoffe 82(1992)6, 499-501], Butadien-α-Methylstyren-Kautschuk [Natov, M., Plaste u. Kautschuk 38(1991)3, 85-88], Styren-Butadien-Blockcopolymere [Karger-Kocsis, J., Kunststoffe 74(1984), 104-107], elastomere Copolymere aus Ethylen und höheren C₄-C₈-Olefinen [Yu, T., ANTEC 94, 2439-2441; Meiske, L., ANTEC 96, 2001-2005] sowie elastomere Ethylen-Vinylacetat-Copolymere [Gupta, A., J. Applied Polymer Sci. 45(1992), 1303-1312] in Anteilen von 10 bis 35 Masse%, bezogen auf die Polyolefinmischung.

Der Nachteil dieser nichtmodifizierten Blends besteht in der begrenzten Verträglichkeit der Schlagzähkomponenten.

Die Aufgabe der vorliegenden Erfindung bestand in der Entwicklung von thermoplastischen Elastomeren, die gleichzeitig eine hohe Festigkeit, Elastizität und gute Einfärbbarkeit besitzen, sowie daraus hergestellter hochschlagzäher Polymerblends.

Überraschenderweise wurde gefunden, daß durch Compoundierung von Propylen-Homopolymeren und/oder Propylen-Copolymeren mit Elastomeren unter Zusatz von leichtflüchtigen C₄-C₇-Dienen, gegebenenfalls in Gegenwart thermisch zerfallender Radikalbildner, thermoplastische Elastomere mit einer sehr feindispersen Verteilung der Elastkomponente in der Polyolefinkomponente gebildet werden, die diese Anforderungen erfüllen.

Die erfindungsgemäße Aufgabe wurde durch thermoplastische Elastomere hoher Festigkeit, Elastizität und guter Einfärbbarkeit, deren eingelagerte Elastomerpartikel einen mittleren Partikeldurchmesser von 0,05 bis 5 µm, bevorzugt 0,1 bis 1 µm, haben, aus Propylen-Homopolymeren und/oder Propylen-Copolymeren, elastomeren C₂-C₈-Olefin-Co- und/oder -Terpolymeren, mehrfunktionell ungesättigten Monomeren, gegebenenfalls thermisch zerfallenden Radikalbildnern und Hilfsstoffen, gelöst, wobei die thermoplastischen Elastomere nach einem Verfahren hergestellt worden sind, bei dem Mischungen aus 20 bis 80 Masse%, bevorzugt 40 bis 60 Masse%, Propylen-Homopolymeren und/oder Propylen-Copolymeren, 80 bis 20 Masse%, bevorzugt 60 bis 40 Masse%, elastomeren C₂-C₈-Olefin-Co- und/oder -Terpolymeren, 0,10 bis 4,0 Masse%, bevorzugt 0,2 bis 1,5 Masse%, bezogen auf die Summe der eingesetzten Polymere, leichtflüchtigen C₄-C₇-Dienen und 0 bis 4,0 Masse%, bevorzugt 0,2 bis 1,5 Masse%, bezogen auf die Summe der eingesetzten Polymere, Acylperoxiden, Alkylperoxiden, Hydroperoxiden, Peroxycarbonaten, Perestern, Ketonperoxiden, Peroxiketalen und/oder Azoverbindungen als thermisch zerfallende. Radikalbildner in der Schmelze umgesetzt worden sind, und wobei vor und/oder nach der Umsetzung 0,01 bis 40 Masse%, bezogen auf die Summe der eingesetzten Polymere, Hilfsstoffe zugesetzt werden können.

Die feindisperse Verteilung der Elastkomponente in der Polyolefinkomponente, die bei den erfindungsgemäßen thermoplastischen Elastomeren im µm-Bereich liegt, läßt sich aus transmissionselektronenmikroskopischen Aufnahmen bestimmen.

Die Propylen-Homopolymere sind erfindungsgemäß bevorzugt weitgehend isotaktische Propylen-Homopolymere, insbesondere isotaktische Propylen-Homopolymere, die unter Anwendung von Ziegler-Natta-Katalysatoren oder Metallocenkatalysatoren hergestellt worden sind. Besonders geeignet sind dabei Propylen-Homopolymere mit bimodaler Molmassenverteilung, Molmassen-Gewichtsmitteln M_{w} von 500000 bis 1500000 g/mol, Molmassen-Zahlenmitteln Mₙ von 25000 bis 100000 g/mol und M_{w} / Mₙ -Werten von 5 bis 60, die in einer Reaktorkaskade hergestellt wurden.

Bevorzugt werden für die erfindungsgemäßen thermoplastischen Elastomere ebenfalls Copolymere aus Propylen und α-Olefinen mit 2 bzw. 4 bis 18 C-Atomen, insbesondere statistische Propylen-Copolymere, Propylen-Blockcopolymere und/oder statistische Propylen-Blockcopolymere.

Eine bevorzugte Variante als Propylen-Homopolymere und/oder Propylen-Copolymere für die erfindungsgemäßen thermoplastischen Elastomere bilden ebenfalls Mischungen aus 50 bis 98 Masse% an weitgehend isotaktischen Propylen-Homopolymeren und/oder Copolymeren aus Propylen und α-Olefinen mit 2 bzw. 4 bis 18 C-Atomen und 2 bis 50 Masse% an nichtisotaktischen Propylen-Homopolymeren, weitgehend amorphen Propylen-Homopolymeren und/oder Propylen-Copolymeren und/oder nichtlinearen modifizierten Propylen-Homopolymeren und/oder Propylen-Copolymeren.

Die nichtisotaktischen Propylen-Homopolymere, die gegebenenfalls in den erfindungsgemäßen thermoplastischen Elastomeren enthalten sein können, sind elastomere hochmolekulare Propylenhomopolymere mit einem Schmelzpunkt von 145 bis 165°C, einer Schmelzviscosität von 200000 bis 2000000 cps bei 190°C, einer Kristallisationswärme von 4 bis 10 cal/g und einem löslichen Anteil in Diethylether von 35 Masse% bis 55 Masse%. Beispiele für diese nichtisotaktischen Propylen-Homopolymere sind die in EP 475 307 oder EP 475 308 beschriebenen Produkte.

Die weitgehend amorphen Propylen-Homopolymere und/oder Propylen-Copolymere, die gegebenenfalls in den erfindungsgemäßen thermoplastischen Elastomeren enthalten sein können, besitzen einen Anteil an kristallinem Polypropylen bzw. kristallinem Propylen-Copolymer unter 10 Masse%, eine Schmelzenthalpie unter 40 J/g und einen Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, da bei ist R ein linearer oder verzweigter Alkylrest mit 2 bis 8 Kohlenstoffatomen. Diese amorphen Propylen-Homopolymere und/oder Propylen-Copoiymere sind insbesondere Stereoblock - Propylen-Homopolymere und/oder Propylen-Copolymere, die beispielsweise unter Anwendung hochaktiver, Metalloxid-fixierter Ziegler-Natta-Katalysatoren [Collette, J., Macromolecules 22 (1989), 3851-3858; DE 2830160] oder löslicher Ziegler-Natta-Katalysatoren [de Candia, F., Makromol. Chem. 189 (1988), 815-821], gegebenfalls unter nachfolgender Reaktivmodifizierung ( EP 636863) und/oder Degradation (EP 640 850), hergestellt werden.

Die nichtlinearen modifizierten Propylen-Homopolymere und/oder Propylen-Copolymere, die gegebenenfalls in den erfindungsgemäßen thermoplastischen Elastomeren enthalten sein können, besitzen Schmelzindices von 0,1 bis 30 g/10 min bei 230°C/2, 16 kg und einem Quotienten aus der Grenzviscosität des nichtlinearen modifizierten Propylen-Homopolymeren und/oder Propylen-Copolymeren und der Grenzviscosität des linearen Propylen-Homopolymeren und/oder Propylen-Copolymeren mit weitgehend gleichem Molmassen-Gewichtsmittel von 0,20 bis 0,99. Diese nichtlinearen modifizierten Propylen-Homopolymere und/oder Propylen-Copolymere werden durch radikalische Kopplungsreaktionen (Modifizierung von Propylen-Homopolymeren und/oder Propylen-Copolymeren mit ionisierender Strahlung bzw. thermisch zerfallenden Radikalbildnern, gegebenenfalls unter Zusatz von mehrfunktionell ethylenisch ungesättigten Monomeren) oder durch polymeranaloge Umsetzungen funktionalisierter Propylen-Homopolymere und/oder Propylen-Copolymere hergestellt.

Beispiele für diese durch radikalische Kopplungsreaktionen erzeugten nichtlinearen modifizierten Propylen-Homopolymere und/oder Propylen-Copolymere sind insbesondere :
- modifizierte Propylen-Homopolymere und/oder Propylen-Copolymere durch Umsetzung von Propylen-Homopolymeren und/oder Propylen-Copolymeren mit Bismaleimidoverbindungen in der Schmelze (EP 574 801 ; EP 574804),
- modifizierte Propyien-Homopoiymere und/oder Propylen-Copolymere durch Behandlung von Propylen-Homopolymeren und/oder Propylen-Copolymeren mit . ionisierender Strahlung in fester Phase (EP 190889; EP 634454),
- modifizierte Propylen-Homopolymere und/oder Propylen-Copolymere durch Behandlung von Propylen-Homopolymeren und/oder Propylen-Copolymeren mit Peroxiden in fester Phase (EP 384431; DE 4340194) bzw. in der Schmelze (EP 142 724),
- modifizierte Propylen-Homopolymere und/oder Propylen-Copolymere durch Behandlung von Propylen-Homopolymeren und/oder Propylen-Copolymeren mit mehrfunktionell ethylenisch ungesättigten Monomeren unter Einwirkung ionisierender Strahlung (EP 678527);
- modifizierte Propylen-Homopolymere und/oder Propylen-Copolymere durch Behandlung von Propylen-Homopolymeren und/oder Propylen-Copolymeren mit mehrfunktionell ethylenisch ungesättigten Monomeren in Gegenwart von Peroxiden in der Schmelze (EP 688817; EP 450342).

Weiterhin werden als nichtlineare modifizierte Propylen-Homopolymere und/oder Propylen-Copolymere, die gegebenenfalls in den erfindungsgemäßen thermoplastischen Elastomeren enthalten sein können, durch polymeranaloge Umsetzung von funktionalisierten Propylen-Homopolymeren und/oder Propylen-Copolymeren, bevorzugt von Säure- und/oder Säureanhydridgruppen enthaltenden Propylen-Homopolymeren und/oder Propylen-Copolymeren, mit mehrfunktionellen Verbindungen entgegengesetzter Reaktivität, bevorzugt mit C₂₋ bis C₁₆ - Diaminen und/oder C₂₋ bis C₁₆ - Diolen, hergestellte nichtlineare modifizierte Propylen-Homopolymere und/oder Propylen-Copolymere bevorzugt.

Beispiele für die durch polymeranaloge Umsetzungen erzeugten nichtlinearen modifizierten Propylen-Homopolymere und/oder Propylen-Copolymere sind insbesondere :
- modifizierte Propylen-Homopolymere und/oder Propylen-Copolymere durch Umsetzung von Maleinsäureanhydrid-gepfropftem Propylen-Homopolymeren und/oder Propylen-Copolymeren mit Diaminen oder Polyglycolen (EP 177401; JP 08 176 365),
- modifizierte Propylen-Homopolymere und/oder Propylen-Copolymere durch Umsetzung von Säure- oder Säureanhydridgruppen enthaltenden Propylen-Homopolymeren und/oder Propylen-Copolymeren mit Epoxy-, Hydroxy- oder Aminogruppen enthaltenden Polymeren (EP 307684; EP 299486).

Eine weitere bevorzugte Variante für nichtlineare modifizierte Propylen-Homopolymere und/oder Propylen-Copolymere, die gegebenenfalls in den erfindungsgemäßen thermoplastischen Elastomeren enthalten sein können, sind nichtlineare modifizierte Propylen-Homopolymere und/oder Propylen-Copolymere, die durch hydrolytische Kondensation von Propylen-Homopolymeren und/oder Propylen-Copolymeren, die hydrolysierbare Silangruppen enthalten, hergestellt werden. Beispiele bilden die in DE 4107635 oder US 47 14 716 beschriebenen Produkte.

Mit besonderem Vorteil stellen die Propylen-Homopolymere und/oder Propylen-Copolymere der erfindungsgemäßen thermoplastischen Elastomere ein Mehrkomponentengemisch aus weitgehend isotaktischen Propylen-Homopolymeren und/oder Copolymeren aus Propylen und Ethylen bzw. α-Olefinen mit 4 bis 18 C-Atomen, nichtisotaktischen Propylen-Homopolymeren, weitgehend amorphen Propylen-Homopolymeren und/oder Propylen-Copolymeren sowie nichtlinearen modifizierten Propylen-Homopolymeren und/oder Propylen-Copolymeren dar.

Durch Einsatz spezieller Mehrkomponentengemische der beschriebenen Polypropylene und Propylen-Copolymere sind spezifische Eigenschaftskombinationen der erfindungsgemäßen thermoplastischen Elastomere erzielbar.

Bevorzugt werden als Propylen-Copolymere in den erfindungsgemäßen thermoplastischen Elastomeren ebenfalls Blends aus
a) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist, und
b) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist.

Diese Polyolefinblends aus kristallinen Copolymeren und elastischen Copolymeren sind beispielsweise die in EP 400 333 oder EP 472 946 beschriebenen Polymermischungen.

Die in den erfindungsgemäßen thermoplastischen Elastomeren enthaltenen elastomeren C₂-C₈-Olefin-Co- und/oder -Terpolymere sind bevorzugt Ethylen-Propylen-Elastomere, Ethylen-Propylen-Dien-Elastomere, Ethylen-Vinylacetat-Copolyere , chlorsulfoniertes Polyethylen, Ethylen-Styren-Elastomere, elastomere Copolymere aus Ethylen und C₄-C₈-Olefinen - insbesondere elastomere Ethylen-Buten-Copolymere, Ethylen-Hexen-Copolymere und/oder Ethylen-Octen-Copolymere -, elastomere Butadien-Styren-Co- und/oder -Terpolymere - insbesondere Styren-Ethylen-Butadien-Styren-Blockcopolymere -, und/oder Styren-Isopren-Co- und/oder -Terpolymere.

Die mit den Mischungen aus Propylen-Homopolymeren und/oder Propylen-Copolymeren und elastomeren C₂-C₈-Olefin-Co- und/oder -Terpolymeren umgesetzten leichtflüchtigen C₄-C₇-Diene sind bevorzugt Butadien, Chloropren, Cyclohexadien, Cyclopentadien, Dimethylbutadien, Heptadien, Hexadien, Isopren und/oder 1,4-Pentadien.

Die in den erfindungsgemäßen thermoplastischen Elastomeren enthaltenen Hilfsstoffe sind bevorzugt 0,01 bis 2,5 Masse% Stabilisatoren, 0,05 bis 2,0 Masse% Nukleierungsmittel, 0,1 bis 1 Masse% Antistatika, 0,2 bis 3 Masse% Pigmente, 3 bis 40 Masse% Füllstoffe, 1 bis 20 Masse% Flammschutzmittel, 3 bis 40 Masse% Verstärkerstoffe und/oder 0,01 bis 5 Masse%, jeweils bezogen auf die Summe der eingesetzten Polymere, Verarbeitungshilfsmittel.

Die in den erfindungsgemäßen thermoplastischen Elastomeren enthaltenen Stabilisatoren sind bevorzugt Mischungen aus 0,01 bis 0,6 Masse% phenolischen Antioxidantien, 0,01 bis 0,6 Masse% 3-Arylbenzofuranonen, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und/oder 0,01 bis 0,8 Masse% sterisch gehinderten Aminen (HALS).

Geeignete phenolische Antioxidantien sind 2-tert.Butyl-4,6-dimethylphenol, 2,6-Ditert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylenbis(6-tert.butyl-4-methylphenol), 4,4'-Thio-bis-(6-tert.butyl-2-methylphenol), 3(3,5-Ditert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6 tetramethyl-4-piperidylsebazat und/oder Poly - ([1,1,3,3,-tetramethylbutyl)-imino] - 1,3,5- triazin - 2,4,diyl)[2,2,6,6-tetramethylpiperidyl)-amino]-hexamethylen-4-(2,2,6,6-tetra-methyl)piperidyl)-imino] besonders geeignet.

Die in den erfindungsgemäßen thermoplastischen Elastomeren gegebenenfalls enthaltenen Nukleierungsmittel sind bevorzugt α-Nukleierungsmittel wie Talkum, Natriumbenzoat oder das Natriumsalz der Methylen-bis(2,4-di-tert.bu-tylphenol)-phosphorsäure oder β-Nukleierungsmittel wie Adipinsäure, Adipinsäuredianilid, Chinacridinonchinon und/oder N, N'-Dicyclododecyl-4,4-biphenyldicarboxamid.

Die in den erfindungsgemäßen thermoplastischen Elastomeren gegebenenfalls enthaltenen Füllstoffe sind bevorzugt Al₂O_{3,} Al(OH)_{3,} Bariumsulfat, Calciumcarbonat, Glaskugeln, Holzmehl, Kieselerde, Mikrohohlkugeln, Ruß, Talkum und/oder Wollastonit.

Die in den erfindungsgemäßen thermoplastischen Elastomeren gegebenenfalls enthaltenen Verstärkerstoffe sind bevorzugt Aramidfasern, Cellulosefasern, Flachs, Jute, Kenaf, Glasfasern, Glasmatten, Mikrofasern aus flüssigkristallinen Polymeren und/oder Polytetrafluorethylen-Fasern.

Als Verarbeitungshilfsmittel können in den erfindungsgemäßen thermoplastischen Elastomeren Calciumstearat, Magnesiumstearat und/oder Wachse enthalten sein.

Erfindungsgemäß sind weiterhin hochschlagzähe Polymerblends, die aus
a) 5 bis 95 Masse%, bevorzugt 10 bis 50 Masse%, an thermoplastischen Elastomeren nach einem oder mehreren der Ansprüche 1 bis 5 und
b) 95 bis 5 Masse%, bevorzugt 90 bis 50 Masse%, an
   b1) nichtmodifizierten Polyolefinen, bevorzugt an weitgehend isotaktischen Propylen-Homopolymeren, Copolymeren aus Propylen und Ethylen bzw. α-Olefinen mit 4 bis 18 C-Atomen, insbesondere statistischen Propylen-Copolymeren, Propylen-Blockcopolymeren und/oder statistischen Propylen-Blockcopolymeren; nichtisotaktischen Propylen-Homopolymeren, weitgehend amorphen Propylen-Homopolymeren und/oder Propylen-Copolymeren, nicht-linearen Propylen-Homopolymeren und/oder Propylen-Copolymeren, und/oder
   b2) Blends aus
      b2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
      b2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis. 8 Kohlenstoffatomen ist, bestehen:

Die nichtmodifizierte Polyolefinkomponente in den erfindungsgemäßen hochschlagzähen Polymerblends bestehen bevorzugt aus denjenigen Propylen-Homopolymeren und/oder Propylen-Copolymeren, die ebenfalls Bestandteil der thermoplastischen Elastomere sind.

Die thermoplastischen Elastomere hoher Festigkeit, Elastizität und guter Einfärbbarkeit, deren eingelagerte Elastomerpartikel einen mittleren Partikeldurchmesser von 0,05 bis 5 µm, bevorzugt 0,1 bis 1 um, haben, aus Propylen-Homopolymeren und/oder Propylen-Copolymeren, elastomeren C₂-C₈-Olefin-Co- und/oder -Terpolymeren, mehrfunktionell ungesättigten Monomeren, gegebenenfalls thermisch zerfallenden Radikalbildnern und Hilfsstoffen, werden erfindungsgemäß nach einem Verfahren hergestellt, bei dem Mischungen aus 20 bis 80 Masse%, bevorzugt 40 bis 60 Masse%, Propylen-Homopolymeren und/oder Propylen-Copolymeren, 80 bis 20 Masse%, bevorzugt 60 bis 40 Masse%, elastomeren C₂-C₈-Olefin-Co- und/oder - Terpolymeren, 0,10 bis 4,0 Masse%, bevorzugt 0,2 bis 1,5 Masse%, bezogen auf die Summe der eingesetzten Polymere, leichtflüchtigen C₄-C₇-Dienen und 0 bis 4,0 Masse%, bevorzugt 0,2 bis 1,5 Masse%, bezogen auf die Summe der eingesetzten Polymere, Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner in kontinuierlichen Knetern in der Schmelze bei Massetemperaturen von 150 bis 300°C, bevorzugt von 185 bis 245°C, und Verweilzeiten von 1 min bis 35 min, bevorzugt 2,5 bis 6 min, umgesetzt werden, wobei vor und/oder nach der Umsetzung 0,01 bis 40 Masse%, bezogen auf die Summe der eingesetzten Polymere, Hilfsstoffe zugesetzt werden können.

Als thermisch zerfallende Radikalbildner werden bei dem erfindungsgemäßen Verfahren zur Herstellung thermoplastischer Elastomerer Acylperoxide, Alkylperoxide, Hydroperoxide, Peroxycarbonate, Perester, Ketonperoxide, Peroxiketale und/oder Azoverbindungen eingesetzt.

Beispiele für die eingesetzten Acylperoxide sind Benzoylperoxid, Chlorbenzoylperoxid, Methoxybenzoylperoxid, Methylbenzoylperoxid, Nitrobenzoylperoxid, Acetylbenzoylperoxid, Lauroylperoxid oder Succinoylperoxid.

Beispiele für die eingesetzten Alkylperoxide sind Allyl-tert.butylperoxid, 2,2-Bis-(tert.butylperoxybutan), 1,1-Bis-(tert.butylperoxi-)-3,3,5-trimethylcyclohexan, Diisopropylaminomethyl-tert.amylperoxid, Dimethylaminomethyl-tert.amylperoxid, Diethylaminomethyl-tert.butylperoxid, Dimethylaminomethyl-tert.butylperoxid, 1.1-Di-(tert. amylperoxi)cyclohexan, tert. Amylperoxid, tert.Butylcumylperoxid, tert.Butylperoxid und 1-Hydroxybutyl-n-butylperoxid.

Beispiele für die eingesetzten Hydroperoxide sind Decalinhydroperoxid und Tetralinhydroperoxid.

Beispiele für die eingesetzten Perester und Peroxicarbonate sind Butylperacetat, Cumylperacetat, Cumylperpropionat, Cycloherylperacetat, Di-tert.butylperadipat, Ditert.butylperazelat, Di-tert.butylperglutarat, Di-tert.butylperphthalat, Di-tert.butylpersebazat, 4-Nitrocumylperpropionat, 1-Phenylethylperbenzoat, Phenylethylnitroperbenzoat, tert.Butyl-bicyclo-(2,2,1)heptanpercarboxylat, tert. Butyl-4-carbomethoxyperbutyrat, tert.Butylcyclobutanpercarboxylat, tert.Butylcyclohexylperoxycarboxylat, tert.Butylcyclopentylpercarboxylat, tert.Butylcyclopropanpercarboxylat, tert.Butyldimethylpercinnamat, tert.Butyl-2-(2,2-diphenylvinyl)perbenzoat, tert.Butyl-4-methoxyperbenzoat, tert.Butylperbenzoat, tert.Butylcarboxicyclohexan, tert.Butylpernaphthoat, tert.Butylperoxiisopropylcarbonat, tert.Butylpertoluat, tert. Butyl-1-phenylcyclopropylpercarboxylat, tert.Butyl-2-propylperpenten-2-oat, tert.Butyl-1-methylcypropylpercarboxylat, tert.Butyl-4-nitrophenylperacetat, tert.Butylnitrophenylperoxycarbamat, tert.Butyl-N-succinimidopercarboxylat, tert.Butylpercrotonat, tert. Butylpermaleinsäure, tert.Butylpermethacrylat, tert.Butylperoctoat, tert.Butylperoxyisopropylcarbonat, tert.Butylperisobutyrat, tert.Butylperacrylat und tert.Butylperpropionat.

Beispiele für die eingesetzten Ketonperoxide sind Methylethylketonhydroperoxid und Diethylketonhydroperoxid.

Beispiele für die eingesetzten Peroxiketale sind 1.1-Di-tert.butylperoxy-3,3,5-trimethylcyclohexan und 1.1-Di-tert.butylperoxy-3,3,5-dimethylethylcyclohexan.

Beispiele für die eingesetzten Azoverbindungen sind 2-Cyano-2-propylazoformamid, 2,2'-Azo-bis-2-methylpropionitril, 1,1'-Azo-bis-cyclopentannitril, 1,1'-Azo-bis-cyclohexannitril, 2,2'-Azo-bis-cyclohexylpropionitril; 2,2'-Azo-bis-methyl-2-methylpropionat und Azo-bis-(N,N'-diethylenisobutyramidin).

Als kontinuierliche Kneter sind bei dem erfindungsgemäßen Verfahren zur Herstellung thermoplastischer Elastomerer insbesondere Doppelschneckenextruder, Einschneckenextruder hoher Mischwirkung oder eine Kaskade aus gekoppelten Knetkammern geeignet.

Eine bevorzugte Variante für die Dosierung der leichtflüchtigen C₄-C₇-Diene und/oder Acylperoxide, Alkylperoxide, Hydroperoxide, Peroxycarbonate, Perester, Ketonperoxide, Peroxiketale und/oder Azoverbindungen als thermisch zerfallende Radikalbildner bei dem Verfahren zur Herstellung thermoplastischer Elastomerer besteht erfindungsgemäß darin, daß die Dosierung im kontinuierlichen Kneter in die Schmelze der Mischung aus Propylen-Homopolymeren und/oder Propylen-Copolymeren, elastomeren C₂-C₈-Olefin - Co- und/ oder -Terpolymeren und gegebenenfalls Hilfsstoffen, leichtflüchtigen C₄-C₇-Dienen und/oder thermisch zerfallenden Radikalbildnern erfolgt.

Eine bevorzugte Variante für die Herstellung der Mischungen aus Propylen-Homopolymeren und/oder Propylen-Copolymeren, elastomeren C₂-C₈-Olefin -Co- und/oder -Terpolymeren und gegebenenfalls Hilfsstoffen mit leichtflüchtigen C₄-C₇-Dienen und/oder Acylperoxiden, Alkylperoxiden, Hydroperoxiden und/ oder Perestern als thermisch zerfallende Radikalbildner bei dem Verfahren zur Herstellung thermoplastischer Elastomerer besteht erfindungsgemäß ebenfalls darin, daß die Mischung der Propylen-Homopolymeren und/oder Propylen-Copolymeren, elastomeren C₂-C₈-Olefin- Co- und/oder -Terpolymeren und gegebenenfalls Hilfsstoffe mit den leichtflüchtigen C₄-C₇-Dienen und/oder thermisch zerfallenden Radikalbildnern durch Vormischung und/oder durch Sorption aus Gasphase in kontinuierlichen Durchflußmischern vor Dosierung der Mischungen in den kontinuierlichen Kneter erfolgt.

Bei der Vormischung oder Sorption der thermische zerfallenden Radikalbildner müssen solche Acylperoxide, Alkylperoxide, Hydroperoxide, Peroxycarbonate, Perester, Ketonperoxide, Peroxiketale und/oder Azoverbindungen eingesetzt werden, die beim Schmelzpunkt bzw. Erweichungspunkt der eingesetzten Propylen-Homopolymere und/oder Propylen-Copolymere eine Halbwertszeit über 40 s besitzen, um einen vorzeitigen Zerfall vor Homogenisierung der Mischung auszuschließen.

Die erfindungsgemäßen thermoplastischen Elastomere sowie Mischungen der thermoplastischen Elastomere mit üblichen Polyolefinen sind bevorzugt für den Einsatz in der Fahrzeugindustrie, insbesondere für Schlauchverbinder, Luftansaugkanäle, Rohrmuffen und Dichtungsprofile, in der Haushaltsgeräteindustrie, insbesondere für Verbinder und Dichtungsprofile, auf dem Bausektor, insbesondere für Fensterabdichtungen, Dichtungsprofile für Zwischenwände, Dehnungsfugen und im Installationsbereich sowie in der Medizintechnik, insbesondere für Schläuche, Dichtungen, Spritzen und Kolben, geeignet.

Von besonderem Vorteil ist, daß die thermoplastischen Elastomere auf Grund der opaken Färbung für die Herstellung eingefärbter Erzeugnisse in beliebigen Farbtönen eingefärbt werden können.

Die Erfindung wird durch nachfolgende Beispiele erläutert :

### Beispiel 1

In einen Werner&Pfleiderer-Doppelschneckenextruder ZSK 54, UD = 36, mit 2 Dosierwaagen, Dosiereinrichtung für flüssige Medien in Zone 4, Vacuumentgasung und Unterwassergranulierung, Temperaturprofil 80/170/220//180/220/220/210/190°C, wird ein Propylen-Ethylen-Copolymer (Ethylengehalt 4,2 Masse%, Schmelzindex 8 g/10 min bei 230°C/2,16 kp) mit 8,0 kg/Std. und ein Ethylen-Octen-Copolymer (Octengehalt 24 Masse%, Schmelzindex 5g/10 min bei 190°C/2,16 kp) mit 12,0 kg/Std. dosiert. Die Mischung wird im Extruder aufgeschmolzen und in die Zone 4 des Extruders ein Gemisch aus 32 Masse% Isopren, 18 Masse% 2,5-Dimethyl-2,5-di(tert.butylperoxyhexan) und 50 Masse% Aceton mit 0,6 kg/Std. dosiert. Die Reaktionsmischung wird einer Vacuumentgasung unterzogen, ausgetragen und granuliert.

Das resultierende opake thermoplastische Elastomer hat folgende Eigenschaften :
Zugspannung[N/mm²] bei Dehnung [%] : 7,5/200; 9/400; 13,5/600;
Zugverformungsrest : 25%

### Beispiel 2

In einen Werner&Pfleiderer-Doppelschneckenextruder nach Beispiel 1 wird ein Propylen-Ethylen-Copolymer nach Beispiel 1 mit 10,0 kg/Std. und ein Ethylen-Octen-Copolymer nach Beispiel 1 mit 10,0 kg/Std. dosiert. Die Mischung wird im Extruder aufgeschmolzen und in die Zone 4 des Extruders ein Gemisch aus 40 Masse% Butadien, 10 Masse% Dicumylperoxid und 50 Masse% Aceton mit 0,65 kg/Std. dosiert. Die Reaktionsmischung wird einer Vacuumentgasung unterzogen, ausgetragen und granuliert.

Das resultierende opake thermoplastische Elastomer hat folgende Eigenschaften :
Zugspannung[N/mm²] bei Dehnung [%] : 8,2/200; 10,2/400; 15,5/600;
Zugverformungsrest : 30%

Als Vergleich besitzt das ohne Zusatz des Gemischs aus Butadien, Dicumylperoxid und Aceton unter gleichen Bedingungen hergestellte thermoplastische Elastomer eine Reißfestigkeit von 9 N/mm² bei einer Reißdehnung von 42%.

Ein unter gleichen Versuchsbedingungen ohne Zusatz von Butadien hergestelltes thermoplastisches Elastomer besitzt folgende Eigenschaften :
Zugspannung[N/mm²] bei Dehnung [%] : 7,3/200; 8,1/400; 10,8/600;
Zugverformungsrest : 29%.

### Beispiel 3

In einen Werner&Pfleiderer-Doppelschneckenextruder nach Beispiel 1, Temperaturprofil 80/170/230//190/230/230/220/190°C, wird ein Polypropylencompound, das aus 99,3 Masse% eines Reaktorblends (Ethylengehalt 33 Mol%, Schmelzindex 8 g/10 min bei 230°C/2,16 kg), bestehend aus einem kristallinen Propylen-Ethylen-Copolymer und einem elastischen Ethylen-Propylen-Copolymer, 0,35 Masse% 2-tert.Butyl-4,6-diisopropylphenol, 0,15 Masse% Bis-2,2,6,6 - tetramethyl-4-piperidylsebazat und 0,2 Masse% Calciumpalmitat mit 8,0 kg/Std. und ein Ethylen-Octen-Copolymer nach Beispiel 1 mit 12 kg/Std. dosiert. Die Mischung wird im Extruder aufgeschmolzen und in die Zone 4 des Extruders ein Gemisch aus 15 Masse% Butadien, 10 Masse% Dimethylbutadien, 15 Masse% 1-Phenylethylperbenzoat, 10 Masse% Dicumylperoxid und 50 Masse% Aceton mit 0,55 kg/Std. dosiert. Die Reaktionsmischung wird einer Vacuumentgasung unterzogen, ausgetragen und granuliert.

Das resultierende opake thermoplastische Elastomer hat folgende Eigenschaften :
Zugspannung[N/mm²] bei Dehnung [%] : 6,5/200; 8,8/400; 12,5/600;
Zugverformungsrest 16,25%

Als Vergleich besitzt das ohne Zusatz des Gemischs aus Dienmonomeren, thermisch zerfallenden Radikalbildnern und Aceton unter gleichen Bedingungen hergestellte thermoplastische Elastomer folgende Eigenschaften :
Zugspannung[N/mm²] bei Dehnung [%] : 2,8/200; 3,0/400; 3,6/600;
Zugverformungsrest : 23,8%

Ein unter gleichen Versuchsbedingungen ohne Zusatz von Dienmonomeren hergestelltes thermoplastisches Elastomer besitzt folgende Eigenschaften
Zugspannung[N/mm²] bei Dehnung [%] 5,0/200; 6,5/400; 7,7/600;
Zugverformungsrest : 21,2%.

### Beispiel 4

In einen Werner&Pfleiderer-Doppelschneckenextruder nach Beispiel 1 mit 3 Dosierbandwaagen, Temperaturprofil 80/175/220//190/230/230/220/190°C, wird ein Polypropylencompound nach Beispiel 3 mit 7,0 kg/Std., ein nichtlineares modifiziertes Propylen-Homopolymer (Schmelzindex 1,9 g/10 min bei 230°C/2,16 kp, Butadiengehalt 0,9 Masse%, Grenzviscosität des nichtlinearen modifizierten Propylen-Homopolymers/Grenzviscosität des nichtmodifizierten Propylen-Homopolymers 0,82) mit 1,2 kg/Std. und ein Ethylen-Octen-Copolymer nach Beispiel 1 mit 12 kg/Std. dosiert. Die Mischung wird im Extruder aufgeschmolzen und in die Zone 4 des Extruders ein Gemisch aus 15 Masse% Isopren, 10 Masse% Cyclopentadien, 15 Masse% tert.Butylpertoluat, 10 Masse% tert. Butylcumylperoxid und 50 Masse% Aceton mit 0,35 kg/Std. dosiert. Die Reaktionsmischung wird einer Vacuumentgasung unterzogen, ausgetragen und granuliert.

Das resultierende opake thermoplastische Elastomer hat folgende Eigenschaften :
Zugspannung[N/mm²] bei Dehnung [%] 6,9/200; 8,3/400; 11.2/600;
Zugverformungsrest : 15,25%

Als Vergleich besitzt das ohne Zusatz des Gemischs aus Dienmonomeren, thermisch zerfallenden Radikalbildnern und Aceton unter gleichen Bedingungen hergestellte thermoplastische Elastomer folgende Eigenschaften :
Zugspannung[N/mm²] bei Dehnung [%] : 3,3/200; 3,5/400; 3,6/600;
Zugverformungsrest : 23,8%

Ein unter gleichen Versuchsbedingungen ohne Zusatz von Dienmonomeren hergestelltes thermoplastisches Elastomer besitzt folgende Eigenschaften :
Zugspannung[N/mm²] bei Dehnung [%] : 4,7/200; 5,9/400; 6,8/600;
Zugverformungsrest : 22,2% .

### Beispiel 5

In einen Werner&Pfleiderer-Doppelschneckenextruder nach Beispiel 1 mit 2 Dosierbandwaagen, Temperaturprofil 80/175/220//190/225/230/220/190°C, wird ein Polypropylencompound nach Beispiel 3 mit 8,0 kg/Std. und ein Talkum-gepudertes Ethylen-Propylen-Ethylidennorbornen -Terpolymer (Schmelzindex 0,5 g/10 min bei 230°C/ 2,16 kp, Propengehalt 24 Masse%, 2,5 Doppelbindungen pro 1000 C-Atome) mit 12 kg/Std. dosiert. Die Mischung wird im Extruder aufgeschmolzen und in die Zone 4 des Extruders ein Gemisch aus 10 Masse% Butadien, 5 Masse% Hexadien, 5 Masse% Diethylketonhydroperoxid, 25 Masse% Dicumylperoxid und 55 Masse% Aceton mit 0,62 kg/Std. dosiert. Die Reaktionsmischung wird einer Vacuumentgasung unterzogen, ausgetragen und granuliert.

Das resultierende opake thermoplastische Elastomer hat folgende Eigenschaften :
Zugspannung[N/mm²] bei Dehnung [%] : 8,5/200; 13,2/400;
Zugverformungsrest 18,7%

Als Vergleich besitzt das ohne Zusatz des Gemischs aus Dienmonomeren, thermisch zerfallenden Radikalbildnern und Aceton unter gleichen Bedingungen hergestellte thermoplastische Elastomer folgende Eigenschaften :
Zugspannung[N/mm²] bei Dehnung [%] : 3,1/200; 3,8/400;
Zugverformungsrest : 25,0%

Ein unter gleichen Versuchsbedingungen ohne Zusatz von Dienmonomeren hergestelltes thermoplastisches Elastomer besitzt folgende Eigenschaften :
Zugspannung[N/mm²] bei Dehnung [%] : 5,5/200; 7,4/400;
Zugverformungsrest : 18,5% .

### Beispiel 6

In einen Werner&Pfleiderer-Doppelschneckenextruder nach Beispiel 1 mit 2 Dosierbandwaagen, Temperaturprofil 80/175/220//190/225/230/220/190°C, wird ein Polypropylencompound nach Beispiel 3 mit 10,0 kg/Std. und ein Talkum-gepudertes Ethylen-Propylen-Ethylidennorbornen -Terpolymer nach Beispiel 5 mit 10,0 kg/Std. dosiert. Die Mischung wird im Extruder aufgeschmolzen und in die Zone 4 des Extruders ein Gemisch aus 20 Masse% Isopren, 5 Masse% Hexadien, 5 Masse% Decalinhydroperoxid, 20 Masse% Dicumylperoxid und 50 Masse% Aceton mit 0,60 kg/Std. dosiert. Die Reaktionsmischung wird einer Vacuumentgasung unterzogen, ausgetragen und granuliert.

Das resultierende opake thermoplastische Elastomer hat folgende Eigenschaften :
Zugspannung[N/mm²] bei Dehnung [%] : 8,0/200; 12,5/400;
Zugverformungsrest 22,5%

Als Vergleich besitzt das ohne Zusatz des Gemischs aus Dienmonomeren, thermisch zerfallenden Radikalbildnern und Aceton unter gleichen Bedingungen hergestellte thermoplastische Elastomer folgende Eigenschaften :
Zugspannung[N/mm²] bei Dehnung [%] 4,8/200; 7,7/400;
Zugverformungsrest 25,0%

Ein unter gleichen Versuchsbedingungen ohne Zusatz von Dienmonomeren hergestelltes thermoplastisches Elastomer besitzt folgende Eigenschaften :
Zugspannung[N/mm²] bei Dehnung [%] : 6,1/200; 8,5/400;
Zugverformungsrest : 26,4%.

### Beispiel 7

In einem kontinuierlichen Durchlaufmischer wird auf eine Mischung aus 40 Masse% eines pulverförmigen Ethylen-Propylen-Copolymers (Ethylengehalt 4,2 Masse%, Schmelzindex 8 g/10 min bei 230°C/2, 16 kp) und 60 Masse% eines feinteiligen , Talkum-gepuderten Ethylen-Propylen-Ethylidennorbornen -Terpolymers (Schmelzindex 0,6 g/10 min bei 230°C/ 2,16 kp, Propengehalt 26 Masse%, 3 Doppelbindungen pro 1000 C-Atome ) 2 Masse%, bezogen auf die Polymermischung, einer 25% Lösung von 2,5-Dimethyl-2,5-di(tert.butylperoxyhexan) in Aceton aufgetrommelt. Anschließend wird die mit thermisch zerfallendem Radikalbildner beladene Polymermischung in einen kontinuierlichen Schneckenmischer überführt und bei einer Verweilzeit von 12 min bei 45°C in Kontakt mit einem Kreislaufgas, das aus 28 Vol.% Butadien und 72 Vol.% Stickstoff besteht, mit 1,1 Gew.% Butadien, bezogen auf die Polymermischung, sorptiv beladen. Nach Dosierung in einen Berstorff-Doppelschneckenextruder Z 25 wird die mit thermisch zerfallendem Radikalbildner und Dien beladene Polymermischung bei 250 U/min, einem Durchsatz von 5 kg/h und einem Temperaturprofil von 25/165/160/160/175/190/230/235/240/240 °C aufgeschmolzen, homogenisiert, ausgetragen und granuliert.

Das resultierende opake thermoplastische Elastomer hat folgende Eigenschaften :
Schmelzindex : 0,06 g/10 min bei 230°C/2,16 kp
Schmelzwärme : 63 J/g Kristallisationstemperatur : 378 K
Zugspannung[N/mm²] bei Dehnung [%] : 7,5/200, 11,2/400, 25,1/600
Zugverformungsrest : 21 %

Als Vergleich besitzt die ohne Vorbehandlung mit thermisch zerfallendem Radikalbildner und Dien unter gleichen Bedingungen hergestellte Polymermischung folgende Eigenschaften :
Schmelzindex : 0,86 g/10 min bei 230°C/2,16 kp
Schmelzwärme : 47 J/g Kristallisationstemperatur 372 K
Zugspannung[N/mm²] bei Dehnung [%] : 3,1/200, 4,2/400, 5,4/600
Zugverformungsrest : 21 %

Die unter gleichen Bedingungen unter Vormischung mit thermisch zerfallendem Radikalbildner, aber ohne Diensorption im kontinuierlichen Schneckenmischer hergestellte Polymermischung besitzt als Vergleich folgende Eigenschaften :
Schmelzindex : 0,15 g/10 min bei 230°C/2,16 kp
Schmelzwärme : 68 J/g Kristallisationstemperatur 373 K
Zugspannung[N/mm²] bei Dehnung [%] : 7,9/200, 9,8/400, 14,9/600
Zugverformungsrest 21 %

### Beispiel 8

In einem kontinuierlichen Durchlaufmischer wird auf eine Mischung aus 40 Masse% eines pulverförmigen Ethylen-Propylen-Copolymers (Ethylengehalt 4,2 Masse%, Schmelzindex 8 g/10 min bei 230°C/2,16 kp) und 60 Masse% eines feinteiligen , Talkum-gepuderten Ethylen-Propylen-Ethylidennorbornen -Terpolymers (Schmelzindex 0,6 g/10 min bei 230°C/ 2,16 kp, Propengehalt 28 Masse%, 3 Doppelbindungen pro 1000 C-Atome ) 2 Masse%, bezogen auf die Polymermischung, einer 25% Lösung von 1,1-Di(tert.butylperoxy)-3,3,5-trimethylcyclohexan in Aceton aufgetrommelt. Anschließend wird die mit thermisch zerfallendem Radikalbildner beladene Polymermischung in einen kontinuierlichen Schneckenmischer überführt und bei einer Verweilzeit von 8 min bei 45°C in Kontakt mit einem Kreislaufgas, das aus 32 Vol.% Isopren und 68 Vol.% Stickstoff besteht, mit 0,7 Gew.% Isopren, bezogen auf die Polymermischung, sorptiv beladen. Nach Dosierung in einen Berstorff-Doppelschneckenextruder Z 25 wird die mit thermisch zerfallendem Radikalbildner und Dien beladene Polymermischung bei 250 U/min, einem Durchsatz von 5,2 kg/h und einem Temperaturprofil von 25/165/160/160/175/185/225/230/240/235 °C aufgeschmolzen, homogenisiert, ausgetragen und granuliert.

Das resultierende opake thermoplastische Elastomer hat folgende Eigenschaften :
Schmelzindex : 0,06 g/10 min bei 230°C/2,16 kp
Schmelzwärme : 64 J/g Kristallisationstemperatur : 376 K
Zugspannung[N/mm²] bei Dehnung [%] : 6,9/200, 11,0/400, 20,7/600
Zugverformungsrest : 25%

### Beispiel 9

In einem Extruder nach Beispiel 7 wird eine Polymermischung aus 70 Masse% eines Polypropylen-Homopolymers (Schmelzindex 1,9 g/10 min bei 230°C/2,16 kp) und 30 Masse% des thermoplastischen Elastomers nach Beispiel 7 bei 250 U/min, einem Durchsatz von 5 kg/h und einem Temperaturprofil von 25/215/215/215/215/215/215/220°C aufgeschmolzen, homogenisiert, ausgetragen und granuliert.

Das resultierende schlagzäh modifizierte Polypropylen besitzt folgende Eigenschaften :
Zugspannung[N/mm²] bei Dehnung [%] : 20,3/200, 21,0/400, 22,8/600
Kerbschlagzähigkeit nach Charpy [kJ/m²] bei [°C] : 43/20, 4,8/-20, 2,4/-40

Als Vergleich besitzt ein unter gleichen Homogenisierungsbedingungen hergestelltes schlagzäh modifiziertes Polypropylen, das aus 70 Masse% des Polypropylen-Homopolymers und 30 Masse% der entsprechenden nichtmodifizierten Propylenpolymer/Elastomer-Mischung nach Beispiel 7 hergestellt wurde, folgende Eigenschaften :
Zugspannung[N/mm²] bei Dehnung [%] : 19,4/200, 20,0/400, 22,7/600
Kerbschlagzähigkeit nach Charpy [kJ/m²] bei [°C] : 10,5/20, 3,2/-20, 2,0/-40

## Patentansprüche

1. Thermoplastische Elastomere hoher Festigkeit, Elastizität und guter Einfärbbarkeit, deren eingelagerte Elastomerpartikel einen mittleren Partikeldurchmesser von 0,05 bis 5 µm, bevorzugt 0,1 bis 1 µm, haben, aus Propylen-Homopolymeren und/oder Propylen-Copolymeren, elastomeren C₂-C₈-Olefin-Co- und/oder -Terpolymeren, mehrfunktionell ungesättigten Monomeren, gegebenenfalls thermisch zerfallenden Radikalbildnern und Hilfsstoffen, **dadurch gekennzeichnet, daß** die thermoplastischen Elastomere nach einem Verfahren hergestellt worden sind, bei dem Mischungen aus 20 bis 80 Masse%, bevorzugt 40 bis 60 Masse%, Propylen-Homopolymeren und/oder Propylen-Copolymeren, 80 bis 20 Masse%, bevorzugt 60 bis 40 Masse%, elastomeren C₂-C₈-Olefin-Co- und/oder -Terpolymeren, 0,10 bis 4,0 Masse%, bevorzugt 0,2 bis 1,5 Masse%, bezogen auf die Summe der eingesetzten Polymere, leichtflüchtigen C₄-C₇-Dienen und 0 bis 4,0 Masse%, bevorzugt 0,2 bis 1,5 Masse%, bezogen auf die Summe der eingesetzten Polymere, Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner in der Schmelze umgesetzt worden sind, wobei vor und/oder nach der Umsetzung 0,01 bis 40 Masse%, bezogen auf die Summe der eingesetzten Polymere, Hilfsstoffe zugesetzt werden können.

2. Thermoplastische Elastomere nach Anspruch 1, **dadurch gekennzeichnet, daß** die als Propylen-Homopolymere und/oder Propylen-Copolymere eingesetzten Polypropylene
a) weitgehend isotaktische Propylen-Homopolymere, die bevorzugt unter Anwendung von Ziegler-Natta-Katalysatoren oder Metallocenkatalysatoren hergestellt worden sind, oder
b) Copolymere aus Propylen und Ethylen bzw. α-Olefinen mit 4 bis 18 C-Atomen, bevorzugt statistische Propylen-Copolymere, Propylen-Blockcopolymere und/oder statistische Propylen-Blockcopolymere oder
c) Mischungen aus 50 bis 98 Masse% der Polymeren a) und/oder b) und 2 bis 50 Masse% von
c1) nichtisotaktischen Propylen-Homopolymeren mit einem Schmelzpunkt von 145 bis 165°C, einer Schmelzviscosität von 200000 bis 2000000 cps bei 190°C, einer Kristallisationswärme von 4 bis 10 cal/g und einem löslichen Anteil in Diethylether von 35 Masse% bis 55 Masse%;
c2) weitgehend amorphen Propylen-Homopolymere oder Propylen-Copolymeren mit einem Anteil an kristallinem Propylen-Homopolymer bzw. kristallinem Propylen-Copolymer unter 10 Masse%, einer Schmelzenthalpie unter 40 J/g und einem Schmelzindex von 0,1 bis 100 g/10 min bei 230°C/2,16 kg, wobei das weitgehend amorphe Polypropylen ein Homopolymer des Propylens und/oder ein Copolymer des Propylens aus mindestens 80 Mol % Propylen und höchstens 20 Mol % eines oder mehrerer α-Olefine der allgemeinen Formel CH₂=CHR ist, wobei R ein linearer oder verzweigter Alkylrest mit 2 bis 8 Kohlenstoffatomen ist;
und/oder
c3) nichtlinearen modifizierten Propylen-Homopolymeren und/oder Propylen-Copolymeren mit Schmelzindices von 0,1 bis 30 g/10 min bei 230°C/2,16 kg und einem Quotienten aus der Grenzviscosität des nichtlinearen modifizierten Propylen-Homopolymeren und/oder Propylen-Copolymeren und der Grenzviscosität des linearen Propylen-Homopolymeren und/oder Propylen-Copolymeren mit weitgehend gleichem Molmassen-Gewichtsmittel von 0,20 bis 0,99;
oder
d) Mischungen der Polymere a) bis c)
sind.

3. Thermoplastische Elastomere nach Anspruch 1, **dadurch gekennzeichnet, daß** die Propylen-Copolymere aus einem Blend aus
a) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
b) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist,
bestehen.

4. Thermoplastische Elastomere nach einem oder mehreren der Ansprüche 1 bis 3, **dadurch gekennzeichnet, daß** die elastomeren C₂-C₈-Olefin-Co- und/oder -Terpolymere Ethylen-Propylen-Elastomere, Ethylen-Propylen-Dien-Elastomere, Ethylen-Vinylacetat-Copolyere , chlorsulfoniertes Polyethylen, Ethylen-Styren-Elastomere, elastomere Copolymere aus Ethylen und C₄-C₈-Olefinen - bevorzugt elastomere Ethylen-Buten-Copolymere, Ethylen-Hexen-Copolymere und/oder Ethylen-Octen-Copolymere -, elastomere Butadien-Styren-Co- und/oder -Terpolymere - bevorzugt Styren-Ethylen-Butadien-Styren-Blockcopolymere -, und/oder Styren-Isopren-Cound/oder -Terpolymere sind.

5. Thermoplastische Elastomere nach einem oder mehreren der Ansprüche 1 bis 4, **dadurch gekennzeichnet, daß** die leichtflüchtigen C₄-C₇-Diene Butadien, Chloropren, Cyclohexadien, Cyclopentadien, Dimethylbutadien, Heptadien, Hexadien, Isopren und/oder 1,4-Pentadien sind.

6. Hochschlagzähe Polymerblends aus
a) 5 bis 95 Masse%, bevorzugt 10 bis 50 Masse%, an thermoplastischen Elastomeren nach einem oder mehreren der Ansprüche 1 bis 5 und
b) 95 bis 5 Masse%, bevorzugt 90 bis 50 Masse%, an
b1) nichtmodifizierten Polyolefinen, bevorzugt an weitgehend isotaktischen Propylen-Homopolymeren, Copolymeren aus Propylen und Ethylen bzw. α-Olefinen mit 4 bis 18 C-Atomen - insbesondere statistischen Propylen-Copolymeren, Propylen-Blockcopolymeren und/oder statistischen Propylen-Blockcopolymeren -, nichtisotaktischen Propylen-Homopolymeren, weitgehend amorphen Polypropylenen, nichtlinearen Propylenpolymeren und/oder
b2) Blends aus
b2.1) 60 bis 98 Masse% eines kristallinen Copolymeren aus 85 bis 99,5 Masse% Propylen und 15 bis 0,5 Masse% Ethylen und/oder einem α-Olefin der allgemeinen Formel CH₂=CHR, wobei R ein linearer oder verzweigter Alkylrest mit 2 bis 8 Kohlenstoffatomen ist,
b2.2) 2 bis 40 Masse% eines elastischen Copolymers aus 20 bis 70 Masse% Ethylen und 80 bis 30 Masse% Propylen und/oder einem α-Olefin der allgemeinen Formel CH₂=CHR, wobei R ein linearer oder verzweigter Alkylrest mit 2 bis 8 Kohlenstoffatomen ist.

7. Verfahren zur Herstellung thermoplastischer Elastomerer hoher Festigkeit, Elastizität und guter Einfärbbarkeit, deren eingelagerte Elastomerpartikel einen mittleren Partikeldurchmesser von 0,05 bis 5 µm, bevorzugt 0,1 bis 1 µm, haben, aus Propylen-Homopolymeren und/oder Propylen-Copolymeren, elastomeren C₂-C₈-Olefin-Co- und/oder -Terpolymeren, mehrfunktionell ungesättigten Monomeren, gegebenenfalls thermisch zerfallenden Radikalbildnern und Hilfsstoffen, **dadurch gekennzeichnet, daß** Mischungen aus 20 bis 80 Masse%, bevorzugt 40 bis 60 Masse%, Propylen-Homopolymeren und/oder Propylen-Copolymeren, 80 bis 20 Masse%, bevorzugt 60 bis 40 Masse%, elastomeren C₂-C₈-Olefin-Co- und/oder -Terpolymeren, 0,10 bis 4,0 Masse%, bevorzugt 0,2 bis 1,5 Masse%, bezogen auf die Summe der eingesetzten Polymere, leichtflüchtigen C₄-C₇-Dienen und 0 bis 4,0 Masse%, bevorzugt 0,2 bis 1,5 Masse%, bezogen auf die Summe der eingesetzten Polymere, Acylperoxiden, Alkylperoxiden, Hydroperoxiden, Peroxycarbonaten, Perestern, Ketonperoxiden, Peroxiketalen und/oder Azoverbindungen als thermisch zerfallende Radikalbildner in kontinuierlichen Knetern in der Schmelze bei Massetemperaturen von 150 bis 300°C, bevorzugt von 185 bis 245°C, und Verweilzeiten von 1 min bis 35 min, bevorzugt 2,5 bis 6 min, umgesetzt werden, wobei vor und/oder nach der Umsetzung 0,01 bis 40 Masse%, bezogen auf die Summe der eingesetzten Polymere, Hilfsstoffe zugesetzt werden können.

8. Verfahren zur Herstellung thermoplastischer Elastomerer nach Anspruch 7, **dadurch gekennzeichnet, daß** die leichtflüchtigen C₄-C₇-Diene und/oder Acylperoxide, Alkylperoxide, Hydroperoxide, Peroxycarbonate, Perester, Ketonperoxide, Peroxiketale und/oder Azoverbindungen als thermisch zerfallende Radikalbildner im kontinuierlichen Kneter in die Schmelze der Mischung aus Propylen-Homopolymeren und/oder Propylen-Copolymeren, elastomeren C₂-C₈-Olefin - Co- und/oder -Terpolymeren und gegebenenfalls Hilfsstoffen leichtflüchtigen C₄-C₇-Dienen und/oder thermisch zerfallenden Radikalbildnern dosiert werden.

9. Verfahren zur Herstellung thermoplastischer Elastomerer nach Anspruch 7, **dadurch gekennzeichnet, daß** die Mischung der Propylen-Homopolymeren und/oder Propylen-Copolymeren, elastomeren C₂-C₈-Olefin -Co- und/oder -Terpolymeren und gegebenenfalls Hilfsstoffe mit den leichtflüchtigen C₄-C₇-Dienen und/oder thermisch zerfallenden Radikalbildnern durch Vormischung und/oder durch Sorption aus Gasphase in kontinuierlichen Durchflußmischern vor Dosierung der Mischungen in den kontinuierlichen Kneter erfolgt.

10. Verwendung von thermoplastischen Elastomeren nach einem oder mehreren der Ansprüche 1 bis 6 sowie von Mischungen der thermoplastischen Elastomeren mit üblichen Polyolefinen in der Fahrzeugindustrie, bevorzugt für Schlauchverbinder, Luftansaugkanäle, Rohrmuffen und Dichtungsprofile, in der Haushaltsgeräteindustrie, bevorzugt für Verbinder und Dichtungsprofile, auf dem Bausektor, bevorzugt für Fensterabdichtungen, Dichtungsprofile für Zwischenwände, Dehnungsfugen und im Installationsbereich sowie in der Medizintechnik, bevorzugt für Schläuche, Dichtungen, Spritzen und Kolben.

## Claims

1. Thermoplastic elastomers having high strength and elasticity and good colorability, whose embedded elastomer particles have an average diameter of from 0.05 to 5 µm, preferably from 0.1 to 1 µm, composed of propylene homopolymers and/or of propylene copolymers, of elastomeric C₂-C₈ olefin co- and/or terpolymers, of polyfunctional unsaturated monomers, where appropriate of thermally decomposing free-radical generators and of auxiliaries, **characterized in that** the thermoplastic elastomers are prepared by a process in which mixtures composed of from 20 to 80% by weight, preferably from 40 to 60% by weight, of propylene homopolymers and/or of propylene copolymers, from 80 to 20% by weight, preferably from 60 to 40% by weight, of elastomeric C₂-C₈-olefin co- and/or terpolymers, from 0.10 to 4.0% by weight, preferably from 0.2 to 1.5% by weight, based on the entirety of the polymers used, of volatile C₄-C₇-dienes, and from 0 to 4.0% by weight, preferably from 0.2 to 1.5% by weight, based on the entirety of the polymers used, of acyl peroxides, of alkyl peroxides, of hydroperoxides, of peroxycarbonates, of peresters, of ketone peroxides, of peroxyketals and/or azo compounds as thermally decomposing free-radical generators were reacted in the melt, where, prior to and/or after the reaction, from 0.01 to 40% by weight, based on the entirety of the polymers used, of auxiliaries may be added.

2. Thermoplastic elastomers according to Claim 1, **characterized in that** the polypropylenes used as propylene homopolymers and/or as propylene copolymers
a) are substantially isotactic propylene homopolymers which have preferably been prepared using Ziegler-Natta catalysts or using metallocene catalysts, or
b) copolymers composed of propylene and ethylene or, respectively, α-olefins having from 4 to 18 carbon atoms, preferably random propylene copolymers, propylene block copolymers and/or random propylene block copolymers, or
c) mixtures composed of from 50 to 98% by weight of the polymers a) and/or b) and from 2 to 50% by weight of
c1) non-isotactic propylene homopolymers with a melting point of from 145 to 165°C, with a melt viscosity of from 200 000 to 2 000 000 cps at 190°C, with an enthalpy of crystallization of from 4 to 10 cal/g and with a diethyl-ether-soluble fraction of from 35 to 55% by weight;
c2) substantially amorphous propylene homopolymers or propylene copolymers with less than 10% by weight content of crystalline propylene homopolymer or, respectively, crystalline propylene copolymer, with an enthalpy of fusion below 40 J/g and with a melt index of from 0.1 to 100 g/10 min at 230°C/2.16 kg, where the substantially amorphous polypropylene is a homopolymer of propylene and/or a copolymer of propylene composed of at least 80 mol% of propylene and at most 20 mol% of one or more α-olefins of the general formula CH₂=CHR, where R is a linear or branched alkyl radical having from 2 to 8 carbon atoms;
and/or
c3) non-linear modified propylene homopolymers and/or propylene copolymers with melt indices of from 0.1 to 30 g/10 min at 230°C/2.16 kg and with a quotient of from 0.20 to 0.99 calculated by dividing the intrinsic viscosity of the non-linear modified propylene homopolymer and/or propylene copolymer by the intrinsic viscosity of the linear propylene homopolymer and/or propylene copolymer with substantially identical weight-average molar mass;
or
d) mixtures of the polymers a) to c).

3. Thermoplastic elastomers according to Claim 1, **characterized in that** the propylene copolymers are composed of a blend composed of
a) from 60 to 98% by weight of a crystalline copolymer composed of from 85 to 99.5% by weight of propylene and from 15 to 0.5% by weight of ethylene and/or of an α-olefin of the general formula CH₂=CHR, where R is a linear or branched alkyl radical having from 2 to 8 carbon atoms,
b) from 2 to 40% by weight of an elastic copolymer composed of from 20 to 70% by weight of ethylene and from 80 to 30% by weight of propylene and/or of an α-olefin of the general formula CH₂=CHR, where R is a linear or branched alkyl radical having from 2 to 8 carbon atoms.

4. Thermoplastic elastomers according to one or more of Claims 1 to 3, **characterized in that** the elastomeric C₂-C₈-olefin co- and/or terpolymers are ethylene-propylene elastomers, ethylene-propylene-diene elastomers, ethylene-vinyl acetate copolymers, chlorosulphonated polyethylene, ethylene-styrene elastomers, elastomeric copolymers composed of ethylene and of C₄-C₈-olefins - preferably elastomeric ethylene-butene copolymers, ethylene-hexene copolymers, and/or ethylene-octene copolymers, elastomeric butadiene-styrene co- and/or terpolymers preferably styrene-ethylene-butadiene-styrene block copolymers - and/or styrene-isoprene co- and/or terpolymers.

5. Thermoplastic elastomers according to one or more of Claims 1 to 4, **characterized in that** the volatile C₄-C₇-dienes are butadiene, chloroprene, cyclohexadiene, cyclopentadiene, dimethylbutadiene, heptadiene, hexadiene, isoprene and/or 1,4-pentadiene.

6. Highly impact-resistant polymer blends composed of
a) from 5 to 95% by weight, preferably from 10 to 50% by weight, of thermoplastic elastomers according to one or more of Claims 1 to 5 and
b) from 95 to 5% by weight, preferably from 90 to 50% by weight, of
b1) unmodified polyolefins, preferably substantially isotactic propylene homopolymers, copolymers composed of propylene and ethylene or, respectively, α-olefins having from 4 to 18 carbon atoms - in particular random propylene copolymers, propylene block copolymers and/or random propylene block copolymers, non-isotactic propylene homopolymers, substantially amorphous polyropylenes, non-linear propylene polymers and/or
b2) blends composed of
b2.1) from 60 to 98% by weight of a crystalline copolymer composed of from 85 to 99.5% by weight of propylene and from 15 to 0.5% by weight of ethylene and/or of an α-olefin of the general formula CH₂=CHR, where R is a linear or branched alkyl radical having from 2 to 8 carbon atoms,
b2.2) from 2 to 40% by weight of an elastic copolymer composed of from 20 to 70% by weight of ethylene and from 80 to 30% by weight of propylene and/or of an α-olefin of the general formula CH₂=CHR, where R is a linear or branched alkyl radical having from 2 to 8 carbon atoms.

7. Process for preparing thermoplastic elastomers having high strength and elasticity and good colourability whose embedded elastomer particles have an average diameter of from 0.05 to 5 µm, preferably from 0.1 to 1 µm, composed of propylene homopolymers and/or of propylene copolymers, of elastomeric C₂-C₈ olefin co- and/or terpolymers, of polyfunctional unsaturated monomers, where appropriate of thermally decomposing free-radical generators and of auxiliaries, **characterized in that** mixtures composed of from 20 to 80% by weight, preferably from 40 to 60% by weight, of propylene homopolymers and/or of propylene copolymers from 80 to 20% by weight, preferably from 60 to 40% by weight, of elastomeric C₂-C₈-olefin co- and/or terpolymers, from 0.10 to 4.0% by weight, preferably from 0.2 to 1.5% by weight, based on the entirety of the polymers used, of volatile C₄-C₇-dienes, and from 0 to 4.0% by weight, preferably from 0.2 to 1.5% by weight, based on the entirety of the polymers used, of acyl peroxides, of alkyl peroxides, of hydroperoxides, of peroxycarbonates, of peresters, of ketone peroxides, of peroxyketals and/or azo compounds as thermally decomposing free-radical generators are reacted in the melt in continuous kneaders at melt temperatures of from 150 to 300°C, preferably from 185 to 245°C, and with residence times of from 1 to 35 min., preferably from 2.5 to 6 min., where, prior to and/or after the reaction, from 0.01 to 40% by weight, based on the entirety of the polymers used, of auxiliaries may be added.

8. Process for preparing thermoplastic elastomers according to Claim 7, **characterized in that** the volatile C₄-C₇-dienes and/or acyl peroxides, alkyl peroxides, hydroperoxides, peroxycarbonates, peresters, ketone peroxides, peroxyketals and/or azo compounds as thermally decomposing free-radical generators are metered within the continuous kneader into the melt of the mixture composed of propylene homopolymers and/or of propylene copolymers, of elastomeric C₂-C₈-olefin co- and/or terpolymers and, where appropriate, of auxiliaries.

9. Process for preparing thermoplastic elastomers according to Claim 7, **characterized in that** the mixing of the propylene homopolymers and/or propylene copolymers, elastomeric C₂-C₈-olefin co- and/or terpolymers, and, where appropriate, auxiliaries with the volatile C₄-C₇-dienes and/or thermally decomposing free-radical generators takes place via premixing and/or via sorption from the gas phase in continuous through-flow mixers prior to metering of the mixtures into the continuous kneader.

10. Use of thermoplastic elastomers according to one or more of Claims 1 to 6, or else of mixtures of the thermoplastic elastomers with conventional polyolefins, in the automotive industry, preferably for tube connectors, air intake ducts, pipe sleeves and sealing profiles, in the household device industry, preferably for connectors and sealing profiles, in the construction sector, preferably for window seals, sealing profiles for partitions, expansion joints and in the fittings sector, or else in medical technology, preferably for tubes, gaskets, syringes and pistons.

## Revendications

1. Elastomères thermoplastiques à haute résistance mécanique, haute élasticité et bonne aptitude à recevoir de la peinture, dont les particules d'élastomère incorporées ont un diamètre moyen de particule de 0,05 à 5 µm, de préférence de 0,1 à 1 µm, à base d'homopolymères de propylène et/ou de copolymères de propylène, de copolymères et/ou terpolymères d'oléfines en C₂-C₈ élastomères, de monomères insaturés polyfonctionnels, éventuellement de générateurs de radicaux se décomposant thermiquement et d'adjuvants, **caractérisés en ce que** les élastomères thermoplastiques ont été préparés selon un procédé dans lequel on a fait réagir dans la masse fondue des mélanges de 20 à 80 % en masse, de préférence 40 à 60 % en masse, d'homopolymères de propylène et/ou de copolymères de propylène, 80 à 20 % en masse, de préférence 60 à 40 % en masse, de copolymères et/ou terpolymères d'oléfines en C₂-C₈ élastomères, 0,10 à 4,0 % en masse, de préférence 0,2 à 1,5 % en masse, par rapport à la somme des polymères utilisés, de diènes en C₄-C₇ volatils et 0 à 4,0 % en masse, de préférence 0,2 à 1,5 % en masse, par rapport à la somme des polymères utilisés, de peroxydes d'acyle, de peroxydes d'alkyle, d'hydroperoxydes, de peroxycarbonates, de peresters, de peroxydes de cétones, de peroxycétals et/ou de composés azo, en tant que générateurs de radicaux se décomposant thermiquement, 0,01 à 40 % en masse, par rapport à la somme des polymères utilisés, d'adjuvants pouvant être ajoutés avant et/ou après la réaction.

2. Elastomères thermoplastiques selon la revendication 1, **caractérisés en ce que** les polypropylènes utilisés en tant qu'homopolymères de propylène et/ou copolymères de propylène
a) sont essentiellement des homopolymères de propylène isotactiques qui ont été préparés de préférence avec utilisation de catalyseurs de Ziegler-Natta ou de catalyseurs métallocène, ou
b) sont des copolymères de propylène et de méthylène ou d'α-oléfines ayant de 4 à 18 atomes de carbone, de préférence des copolymères de propylène statistiques, des copolymères séquencés de propylène et/ou des copolymères séquencés de propylène statistiques, ou
c) sont des mélanges de 50 à 98 % en masse des polymères a) et/ou b) et de 2 à 50 % en masse
C1) d'homopolymères de propylène non isotactiques ayant un point de fusion de 145 à 165°C, une viscosité à chaud de 200 000 à 2 000 000 centipoises à 190°C, une chaleur de cristallisation de 4 à 10 cal/g et une fraction soluble dans l'oxyde d'éthyle de 35 % en masse à 55 % en masse ;
C2) d'homopolymères de propylène ou copolymères de propylène, essentiellement amorphes, ayant une teneur en homopolymère de propylène cristallin ou en copolymère de propylène cristallin inférieure à 10 % en masse, une enthalpie de fusion inférieure à 40 J/g et un indice de fluidité à chaud de 0,1 à 100 g/10 min à 230°C et sous 2,16 kg, le polypropylène essentiellement amorphe étant un homopolymère du propylène et/ou un copolymère du propylène constitué d'au moins 80 % en moles de propylène et d'au maximum 20 % en moles d'une ou plusieurs α-oléfines de formule générale CH₂=CHR, R étant un radical alkyle linéaire ou ramifié ayant de 2 à 8 atomes de carbone ; et/ou
C3) d'homopolymères de propylène et/ou copolymères de propylène, modifiés, non linéaires, ayant des indices de fluidité à chaud de 0,1 à 30 g/10 min à 230°C et sous 2,16 kg et un quotient de la viscosité limite de l'homopolymère de propylène et/ou du copolymère de propylène, modifiés, non linéaires, et de la viscosité limite de l'homopolymère de propylène linéaire et/ou du copolymère de propylène linéaire, de masse moléculaire moyenne en poids pratiquement identique, allant de 0,20 à 0,99 ; ou
d) sont des mélanges des polymères a) à c).

3. Elastomères thermoplastiques selon la revendication 1, **caractérisés en ce que** les copolymères de propylène consistent en un alliage de
a) 60 à 98 % en masse d'un copolymère cristallin de 85 à 99,5 % en masse de propylène et 15 à 0,5 % en masse d'éthylène et/ou d'une α-oléfine de formule générale CH₂=CHR, R étant un radical alkyle linéaire ou ramifié ayant de 2 à 8 atomes de carbone,
b) 2 à 40 % en masse d'un copolymère élastique de 20 à 70 % en poids d'éthylène et 80 à 30 % en poids de propylène et/ou d'une α-oléfine de formule générale CH₂=CHR, R étant un radical alkyle linéaire ou ramifié ayant de 2 à 8 atomes de carbone.

4. Elastomères thermoplastiques selon une ou plusieurs des revendications 1 à 3, **caractérisés en ce que** les copolymères et/ou terpolymères d'oléfines en C₂-C₈ élastomères sont des élastomères éthylène/propylène, des élastomères éthylène/propylène/diène, des copolymères éthylène/acétate de vinyle, du polyéthylène chlorosulfoné, des élastomères éthylène/styrène, des copolymères élastomères d'éthylène et d'oléfines en C₄-C₈ - de préférence des copolymères éthylène/butène élastomères, des copolymères éthylène/hexène élastomères et/ou des copolymères éthylène/butène élastomères, des copolymères et/ou terpolymères butadiène/styrène élastomères - de préférence des copolymères séquencés styrène/éthylène/butadiène/styrène - et/ou des copolymères et/ou terpolymères styrène/isoprène.

5. Elastomères thermoplastiques selon une ou plusieurs des revendications 1 à 4, **caractérisés en ce que** les diènes en C₄-C₇ volatils sont le butadiène, le chloroprène, le cyclohexadiène, le cyclopentadiène, le diméthylbutadiène, l'heptadiène, l'hexadiène, l'isoprène et/ou le 1,4-pentadiène.

6. Alliages de polymères à haute résistance au choc, composés de
a) 5 à 95 % en masse, de préférence 10 à 50 % en masse, d'élastomères thermoplastiques selon une ou plusieurs des revendications 1 à 5 et
b) 95 à 5 % en masse, de préférence 90 à 50 % en masse de
b1) polyoléfines non modifiées, de préférence d'homopolymères de propylène essentiellement isotactiques, de copolymères de propylène et d'éthylène ou d'α-oléfines ayant de 4 à 18 atomes de carbone - en particulier de copolymères de propylène statistiques, de copolymères séquencés de propylène et/ou de copolymères séquencés de propylène statistiques -, d'homopolymères de propylène non isotactiques, de polypropylènes essentiellement amorphes, de polymères de propylène non linéaires, et/ou
b2) d'alliages composés de
b2.1) 60 à 98 % en masse d'un copolymère cristallin constitué de 85 à 99,5 % en masse de propylène et 15 à 0,5 % en masse d'éthylène et/ou d'une α-oléfine de formule générale CH₂=CHR, R étant un radical alkyle linéaire ou ramifié ayant de 2 à 8 atomes de carbone,
b2.2) 2 à 40 % en masse d'un copolymère élastique constitué de 20 à 70 % en masse d'éthylène et de 80 à 30 % en masse de propylène et/ou d'une α-oléfine de formule générale CH₂=CHR, R étant un radical alkyle linéaire ou ramifié ayant de 2 à 8 atomes de carbone.

7. Procédé pour la préparation d'élastomères thermoplastiques à haute résistance mécanique, haute élasticité et bonne aptitude à recevoir de la peinture, dont les particules d'élastomère incorporées ont un diamètre moyen de particule de 0,05 à 5 µm, de préférence de 0,1 à 1 µm, à partir d'homopolymères de propylène et/ou de copolymères de propylène, de copolymères et/ou terpolymères d'oléfines en C₂-C₈ élastomères, de monomères insaturés polyfonctionnels, éventuellement de générateurs de radicaux se décomposant thermiquement et d'adjuvants, **caractérisés en ce qu'**on fait réagir dans des malaxeurs continus, dans la masse fondue, à des températures de masse de 150 à 300°C, de préférence de 185 à 245°C et pendant des temps de séjour de 1 minute à 35 minutes, de préférence de 2,5 à 6 minutes, des mélanges de 20 à 80 % en masse, de préférence 40 à 60 % en masse, d'homopolymères de propylène et/ou de copolymères de propylène, 80 à 20 % en masse, de préférence 60 à 40 % en masse, de copolymères et/ou terpolymères d'oléfines en C₂-C₈ élastomères, 0,10 à 4,0 % en masse, de préférence 0,2 à 1,5 % en masse, par rapport à la somme des polymères utilisés, de diènes en C₄-C₇ volatils et 0 à 4,0 % en masse, de préférence 0,2 à 1,5 % en masse, par rapport à la somme des polymères utilisés, de peroxydes d'acyle, peroxydes d'alkyle, hydroperoxydes, peroxycarbonates, peresters, peroxydes de cétones, peroxycétals et/ou composés azo, en tant que générateurs de radicaux se décomposant thermiquement, 0,01 à 40 % en masse, par rapport à la somme des polymères utilisés, d'adjuvants pouvant être ajoutés avant et/ou après la réaction.

8. Procédé pour la préparation d'élastomères thermoplastiques selon la revendication 7, **caractérisé en ce que** les diènes en C₄-C₇ volatils et/ou les peroxydes d'acyle, peroxydes d'alkyle, hydroperoxydes, peroxycarbonates, peresters, peroxydes de cétones, peroxycétals et/ou composés azo en tant que générateurs de radicaux se décomposant thermiquement sont introduits de façon réglée, dans des malaxeurs continus, dans la masse fondue du mélange d'homopolymères de propylène et/ou de copolymères de propylène, de copolymères et/ou terpolymères d'oléfines en C₂-C₈ élastomères et éventuellement d'adjuvants diènes en C₄-C₇ volatils et/ou générateurs de radicaux se décomposant thermiquement.

9. Procédé pour la préparation d'élastomères thermoplastiques selon la revendication 7, **caractérisé en ce que** le mélange des homopolymères de propylène et/ou copolymères de propylène, co- et/ou terpolymères d'oléfines en C₂-C₈ élastomères et éventuellement d'adjuvants comportant les diènes en C₄-C₇ volatils et/ou les générateurs de radicaux se décomposant thermiquement, s'effectue par prémélange et/ou par sorption à partir de la phase gazeuse, dans des mélangeurs à écoulement continu, avant l'introduction réglée des mélanges dans le malaxeur continu.

10. Utilisation d'élastomères thermoplastiques selon une ou plusieurs des revendications 1 à 6 ainsi que de mélanges des élastomères thermoplastiques avec des polyoléfines usuelles, dans l'industrie de l'automobile, de préférence pour des raccords de tuyaux souples, des conduits d'aspiration d'air, des manchons de tubes et des profilés d'étanchéité, dans l'industrie des appareils ménagers, de préférence pour des raccords et des profilés d'étanchéité, dans le secteur du bâtiment, de préférence pour des joints d'étanchéité de fenêtres, des profilés d'étanchéité pour cloisons, des joints de dilatation, et dans le domaine de l'assemblage ainsi que dans la technique médicale, de préférence pour des tuyaux souples, des joints d'étanchéité, des seringues et des pistons.
